# EUROPÄISCHE PATENTSCHRIFT

(11) **EP 1 422 866 B1**
(45) Veröffentlichungstag und Bekanntmachung des Hinweises auf die Patenterteilung: **08.03.2006**
(21) Anmeldenummer: 02406020.4
(22) Anmeldetag: 25.11.2002
(51) Int. Cl.: H04L 12/14

(54) **Verfahren und Vorrichtung zum computerisierten Erfassen von Kostendaten für die Verrechnung der Übermittlung von Datenpaketen**
Process and apparatus for determining cost data for the billing of datatransport
Procédé et appareil pour déterminer des coûts pour la facturation du transport de données

(43) Veröffentlichungstag der Anmeldung: 26.05.2004
(73) Patentinhaber: Swisscom AG, 3000 Bern 29 (CH)
(72) Erfinder: Watrin, David, 3050 Bern (CH)
(74) Vertreter: BOVARD AG

(56) Entgegenhaltungen:
- US-A- 6 088 687
- US-A1- 2002 083 186
- US-A1- 2002 099 848
- WENJIA FANG: "Building an accounting infrastructure for the Internet" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18. November 1996 (1996-11-18), Seiten 105-109, XP010220161 ISBN: 0-7803-3336-5

## Beschreibung

### Technisches Gebiet

Die vorliegende Erfindung betrifft ein Verfahren und Vorrichtungen zum computerisierten Erfassen von Kostendaten für die Verrechnung der Übermittlung von Datenpaketen. Die Erfindung betrifft insbesondere ein Verfahren zur computerisierten Erfassung von Kostendaten für Verrechnung der Übermittlung von Datenpaketen in einem paketorientierten Telekommunikationsnetz, in welchem Datenpakete über eine oder mehrere computerisierte Verbindungseinheiten übermittelt werden, sowie eine solche computerisierte Verbindungseinheit, welche mit dem paketorientierten Telekommunikationsnetz zum Entgegennehmen und Weiterleiten von Datenpaketen verbindbar ist, und ein Computerprogrammprodukt zum Steuern der computerisierten Verbindungseinheit.

### Stand der Technik

Das gegenwärtig am meisten verbreitete paketorientierte Telekommunikationsnetz ist das auf dem Internet-Protokoll basierende Internet. Teile des Internets werden über computerisierte Verbindungseinheiten verbunden, die als Verbindungspunkte, so genannte Points of Interconnection (POI), zu Subnetzen des Internets dienen. Die Verbindungseinheiten werden von Verbindungspartnern, so genannte Interconnection Partners, betrieben. In einer so genannten peer-to-peer-Verbindung werden Verbindungseinheiten von Internet Dienstanbietern, so genannte Internet Service Providers (ISP), miteinander verbunden. In einer so genannten Transitverbindung wird einem kleineren ISP ein Zugang mit einer definierten maximalen Bandbreite über die Verbindungseinheit eines grösseren ISPs zum Internet erstellt. Während die gewährte Bandbreite einer Transitverbindung für einen festen Kostenbetrag verrechnet werden kann, werden für peer-to-peer-Verbindungen keine Kosten verrechnet. Es ist folglich nicht möglich, auf Grund von Transitverbindungen und peer-to-peer-Verbindungen die tatsächliche Benutzung der Netzwerkinfrastruktur zu verrechnen und allfällige Verletzungen von Dienstleistungsvereinbarungen zu kompensieren.

Bei den herkömmlichen Verrechnungssystemen zur Verrechnung von Kosten zwischen einem Inhaltsanbieter, dem so genannten Content Provider, und einem Kunden, der den Inhalt über das Internet vom Inhaltsanbieter bezieht, werden die Betreiber der an der Übermittlung beteiligten Verbindungseinheiten nicht entschädigt.

In der Patentanmeldung WO 97/33404 wird ein Verfahren und System für die Verrechnung der Datenübermittlung in einem paketorientierten Telekommunikationsnetz, insbesondere das Internet, beschrieben. Gemäss WO 97/33404 wird beim Inhaltsanbieter ein Werttoken in jedes Datenpaket eingefügt, das vom Inhaltsanbieter über das Internet übermittelt wird. Ein Werttoken umfasst die Identität einer zentralisierten Verrechnungsstelle und einen Kredit wert, der einer Geldgebühr entspricht. Gemäss WO 97/33404 wird der Kreditwert des Werttokens bei jeder Verbindungseinheit, durch die das Datenpaket geleitet wird, um einen Kostenbetrag reduziert, der der Dienstleistung entspricht, die durch die betreffende Verbindungseinheit geleistet wird. Die Betreiber der Verbindungseinheiten können gemäss WO 97/33404 durch die zentralisierte Verrechnungsstelle für die von ihren Verbindungseinheiten abgezogenen Kostenbeträge entschädigt werden. Das Verfahren und System gemäss WO 97/33404 ermöglicht eine paketorientierte Erfassung von Übermittlungskosten bei den einzelnen Verbindungseinheiten. Es ist jedoch nicht möglich, Datenpakete oder Datenströme von zusammengehörenden Datenpaketen gemäss unterschiedlichen, jeweils vom Kreditwert der betreffenden Datenpakete abhängigen Regeln zu verrechnen. Das Verfahren und System gemäss WO 97/33404 ermöglicht auch nicht Datenpakete abhängig vom Kommunikationspartner, von welchem die Datenpakete übermittelt wurden, gemäss unterschiedlichen Regeln zu verrechnen. Datenpakete werden, unabhängig von welcher Verbindungseinheit sie erhalten werden, gleich verrechnet. Schliesslich können Verrechnungsprobleme bei erbrachten Dienstleistungen mit ungenügender Dienstqualität und/oder bei allfälligen Verletzungen von Dienstteistungsvereinbarungen gemäss WO 97/33404 nicht beigelegt werden. Datenpakete werden unabhängig von der Dienstqualität, die bei der Weiterleitung der Datenpakete erreicht wurde, gleich verrechnet.

In der Patentanmeldung US 2002/0099848 wird eine Vorrichtung zur Verrechnung von Kommunikationsdienstleistungen an einen Kunden beschrieben. Mittels eines traffic type dividers werden Datenströme, welche zwischen dem Kunden und einem IP Netzwerk transportiert werden, entsprechend einem service type aufgeteilt. Die Datenströme werden gemessen und mittels einer statistical processing unit sowie einer Tariffunktion werden Daten für die Verrechnung von Kommunikationsdienstleistungen erzeugt. Mit dieser Vorrichtung kann jedoch nicht überprüft werden, ob eine Dienstleistungsvereinbarung zwischen dem Serviceprovider und dem Kunden eingehalten wurde. Diese Vorrichtung kann zudem nicht für die gegenseitige Abrechnung von Kommunikationsdienstleistungen zwischen Partnerkommunikationsnetzwerken verwendet werden.

In der Patentanmeldung US 2002/0083186 wird ein Verfahren zur elektronischen Bezahlung der Datenübertragung von einem Server zu einem Client über ein Computer Netzwerk mit mindestens einem Router beschrieben. Datenpakete welche vom Server gesendet werden umfassen ein Datenfeld mit einem Wert, welches den kommerziellen Wert des Datenpakets repräsentiert. Jeder Router des Computer Netzwerks analysiert und modifiziert dieses Datenfeld gemäss einer Kostenregel. Jeder Router speichert die akkumulierten Werte der empfangenen und weitergeleiteten Datenpakete, sodass der Operator des Routers für die erbrachte Dienstleistung entschädigt werden kann. Mit diesem Verfahren kann jedoch nicht überprüft werden, ob eine Dienstleistungsvereinbarung eingehalten wurde und es kann nicht für die gegenseitige Abrechnung von Kommunikationsdienstleistungen zwischen Partnerkommunikationsnetzwerken verwendet werden.

### Darstellung der Erfindung

Es ist eine Aufgabe der vorliegenden Erfindung, ein neues Verfahren und neue Vorrichtungen zum computerisierten Erfassen von Kostendaten für die Verrechnung der Übermittlung von Datenpaketen in einem paketorientierten Telekommunikationsnetz vorzuschlagen, in welchem Datenpakete über eine oder mehrere computerisierte Verbindungseinheiten übermittelt werden, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass durch die Verbindungseinheiten jeweils ein Datenstrom von zusammengehörenden Datenpaketen, die in den betreffenden Verbindungseinheiten entgegengenommen wurden, ermittelt wird, dass durch die Verbindungseinheiten jeweils auf Grund von Wertklassenangaben, die in Datenpaketen des Datenstroms enthalten sind, eine Wertklasse für den Datenstrom ermittelt wird, dass durch die Verbindungseinheiten jeweils Abrechnungsregeln für den Datenstrom ermittelt werden, die der ermittelten Wertklasse des Datenstroms zugeordnet sind, und dass durch die Verbindungseinheiten jeweils auf Grund der ermittelten Wertklasse des Datenstroms und den ermittelten Abrechnungsregeln des Datenstroms Kostenbelege für die Verrechnung der Weiterleitung der Datenpakete des Datenstroms erzeugt und gespeichert werden, welche jeweils mindestens einen Kostenbetrag umfassen.

Durch die Wertklasse wird der Geldwert oder Geldwertbereich des Datenstroms definiert. Die in den Verbindungseinheiten gespeicherten Abrechnungsregeln entsprechen einem computerisierten Teil der Dienstteistungsver einbarung zwischen den Betreibern der Verbindungseinheiten. Die Abrechnungsregeln ermöglichen eine flexible Verrechnung der Übermittlung von Datenströmen, wobei verschiedene Abrechnungsregeln für unterschiedliche Datenströme bereitgestellt werden können, so dass die Verrechnung in den Verbindungseinheiten abhängig von der Wertklasse eines Datenstroms, unterschiedlich durchgeführt werden kann.

Erfindungsgemäss wird durch die Verbindungseinheiten jeweils auf Grund von Daten in den Datenpaketen des Datenstroms eine Dienstklasse für den Datenstrom ermittelt, durch die Verbindungseinheiten wird jeweils eine für die Weiterleitung der Datenpakete des Datenstroms durch die betreffende Verbindungseinheit erreichte Dienstqualität für den Datenstrom ermittelt, und die Kostenbelege werden durch die Verbindungseinheiten zudem auf Grund der ermittelten Dienstklasse des Datenstroms und der ermittelten erreichten Dienstqualität des Datenstroms erzeugt. In einer Ausführungsvariante wird die Dienstklasse des Datenstroms auf Grund der Wertklasse oder auf Grund der Wertklassenangaben bestimmt.

Auf Grund der Dienstklasse werden Dienstqualitätsparameter bestimmt, die zur Ermittlung der Dienstqualität herangezogen werden müssen. Auf Grund der Dienstklasse wird vorzugsweise auch eine Solldienstqualität mit Minimalanforderungen an die Dienstqualitätsparameter respektive an die Dienstqualität bestimmt. Durch die Ermittlung der für die Weiterleitung der Datenpakete des Datenstroms tatsächlich erreichten Dienstqualität ist es möglich, in der Verbindungseinheit Vergleiche zwischen der Solldienstqualität und der tatsächlich erreichten Dienstqualität durchzuführen. Für die Verrechnung der Dienstleistungen, die durch eine Verbindungseinheit für Übermittlung des Datenstroms erbracht wurde, kann folglich nicht nur der durch die Wertklasse bestimmte Geldwert oder Geldwertbereich berücksichtigt werden, sondern auch das Resultat des Vergleichs zwischen dem Sollwert und dem erreichten Wert der Dienstqualität. Es ist also möglich, erbrachte Dienstleistungen mit ungenügender Dienstqualität und/oder Verletzungen von Dienstleistungsvereinbarungen direkt in der Verbindungseinheit festzustellen, zu erfassen und in die Kostenverrechnung einfliessen zu lassen. In Kenntnis der Wertklasse eines Datenstroms ist es zudem möglich, in der Verbindungseinheit zu entscheiden, die Übermittlung eines Datenstroms nicht zu übernehmen, da beispielsweise auf Grund der aktuellen Netzwerkbelastung das Risiko, die Solldienstqualität nicht erreichen zu können, durch die Verbindungseinheit als zu gross ermittelt wird.

Vorzugsweise werden die Abrechnungsregeln jeweils in den Verbindungseinheiten gespeichert, wobei in die Abrechnungsregeln jeweils Kreditdaten eingefügt werden, die die Berechnung von Kostenbeträgen für Fälle regeln, wo die ermittelte erreichte Dienstquatität eine definierte SoitdienstquaHtät erreicht oder übertrifft, und wobei in die Abrechnungsregeln jeweils Belastungsdaten eingefügt werden, die die Berechnung von Kostenbeträgen für Fälle regeln, wo die ermittelte erreichte Dienstqualität eine definierte Solldienstqualität nicht erreicht. Derart gestaltete Abrechnungsregeln ermöglichen eine unterschiedliche Durchführung der Verrechnung der Übermittlung der Datenströme, jeweils abhängig davon, ob die Solldienstqualität bei der Übermittlung eines Datenstroms erreicht oder nicht erreicht wird.

Die Kreditdaten und die Belastungsdaten definieren vorzugsweise jeweils einen von der ermittelten Wertklasse abhängigen Kreditbetrag respektive Belastungsbetrag. Die Kreditdaten und die Belastungsdaten umfassen beispielsweise einen Anteilswert, zum Beispiel einen positiven Kreditanteil oder einen negativen Belastungsanteil, oder einen positiven Kreditwert oder negativen Belastungswert, die abhängig von der Wertklasse festgelegt sind. Die Kredit- und Belastungsangaben ermöglichen in den Verbindungseinheiten einfach Kostenbelege für die Verrechnung der Übermittlung von Datenströmen zu erzeugen, deren Kostenbeträge abhängig davon sind, ob die Solldienstqualität erreicht oder nicht erreicht wurde.

Die in den Verbindungseinheiten gespeicherten Abrechnungsregeln werden vorzugsweise jeweils einer Wertklasse, einer Dienstklasse und/oder einer Partneridentifizierung von einer Partnerkommunikationseinheit im Telekommunikationsnetz zugeordnet gespeichert, durch die Verbindungseinheiten werden die Abrechnungsregeln zusätzlich jeweils auf Grund der ermittelten Dienstklasse und/oder der Partneridentifizierung der Partnerkommunikationseinheit bestimmt, von der die Datenpakete des Datenstroms erhalten wurden, und die Kostenbeträge werden in den Verbindungseinheiten jeweils für die betreffende Partneridentifzierung aggregiert. Durch die Zuordnung von unterschiedlichen Abrechnungsregeln zu Dienstklassen von Datenströmen kann die Verrechnung der Übermittlung der Datenströme flexibel abhängig von der Dienstklasse der Datenströme durchgeführt werden. Durch die Zuordnung von unterschiedlichen Abrechnungsregeln zu Partneridentifizierungen kann die Verrechnung der Übermittlung der Datenströme für verschiedene Partnerkommunikationseinheiten entsprechend unterschiedlichen Dienstleistungsvereinbarungen durchgeführt werden. Durch das Aggregieren der Kostenbeträge per Partneridentifizierung kann direkt in den Verbindungseinheiten der Saldo für die Weiterleitung von Datenströmen von einer Partnerkommunikationseinheit geführt werden. In einer Ausführungsvariante können die Kostenbelege durch die Verbindungseinheit zur weiteren Kostenverrechnung an ein Verrechnungszentrum übermittelt werden.

Neben dem beschriebenen Verfahren zur computerisierten Erfassung von Kostendaten für die Verrechnung der Übermittlung von Datenpaketen in einem paketorientierten Telekommunikationsnetz, betrifft die vorliegende Erfindung auch eine für das Verfahren geeignete computerisierte Verbindungseinheit, welche mit dem paketorientierten Telekommunikationsnetz zum Entgegennehmen und Weiterleiten von Datenpaketen verbindbar ist, und ein Computerprogrammprodukt, das die computerisierte Verbindungseinheit für den Einsatz im Verfahren geeignet steuert.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, das schematisch ein paketorientiertes Telekommunikationsnetz darstellt, mit welchem eine Datenquelle und eine Datensenke jeweils über ein Zugangsnetz und eine Zugangseinheit verbunden sind.
Figur 2 zeigt ein Blockdiagramm, das schematisch eine Verbindungseinheit darstellt, die zum Entgegennehmen und Weiterleiten von Datenpaketen mit einem paketorientierten Telekommunikationsnetz verbindbar ist.

### Wege zur Ausführung der Erfindung

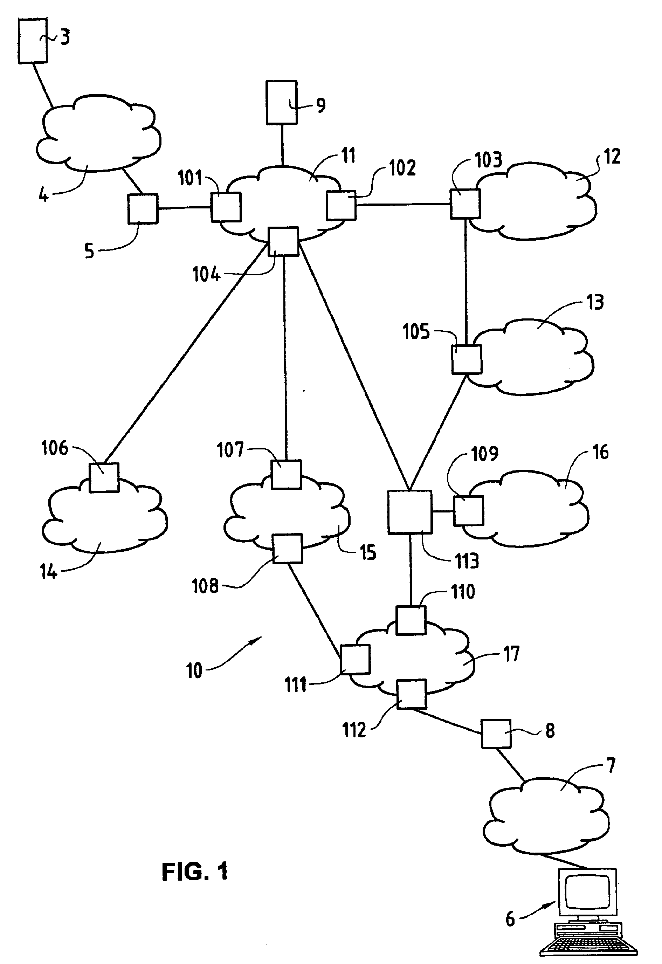

In der Figur 1 bezeichnet das Bezugszeichen 10 ein paketorientiertes Telekommunikationsnetz, insbesondere ein auf dem Internet Protokoll basierendes Internet Netzwerk. Das Telekommunikationsnetz 10 umfasst mehrere Subnetze 11, 12, 13, 14, 15, 16 und 17 mit computerisierten Verbindungseinheiten 101, 102, 103, 104, 105, 106, 107, 108, 109, 110, 111 und 112, die als Verbindungspunkte (Points of Interconnection, POI) zu den Subnetzen 11, 12, 13, 14, 15, 16 und 17 dienen. Die Subnetze 11, 12, 13, 14, 15, 16 und 17 sind über die Verbindungseinheiten 102, 103, 104, 105, 106, 107, 108, 109, 110 und 111 sowie über die computerisierte Vermittlungseinheit 113 für den Datenaustausch miteinander verbunden. Wie aus der Figur 1 ersichtlich ist, sind jeweils zwei Verbindungseinheiten 102, 103, 104, 105, 106, 107, 108, 109, 110 und 111 zur Verbindung von Subnetzen 11, 12, 13, 14, 15, 16 und 17 miteinander verbunden. Die Vermittlungseinheit 113 ist hingegen mit mehreren Verbindungseinheiten 105, 107, 109 und 110 direkt verbunden und ist so eingerichtet, dass sie diese Verbindungseinheiten 105, 107, 109 und 110 untereinander verbinden kann, so dass der Datenaustausch zwischen den Subnetzen 11, 13, 16 und 17 über die Vermittlungsstelle 113 erfolgen kann.

In der Figur 1 bezeichnet das Bezugszeichen 3 eine Datenquelle, die über ein Zugangsnetz 4 und eine Zugangseinheit 5 mit einer Verbindungseinheit 101 verbunden ist. Die Verbindungseinheit 101 verbindet die Zugangseinheit 5 und somit die Datenquelle 3 mit dem Telekommunikationsnetz 10.

In der Figur 1 bezeichnet das Bezugszeichen 6 eine Datensenke, die über ein Zugangsnetz 7 und eine Zugangseinheit 8 mit einer Verbindungseinheit 112 verbunden ist. Die Verbindungseinheit 112 verbindet die Zugangseinheit 8 und somit die Datensenke 6 mit dem Telekommunikationsnetz 10.

Die Datenquelle 3 und die Datensenke 6 umfassen jeweils einen Computer, der für die Datenübermittlung via das Zugangsnetz 4 respektive 7 und via die Zugangseinheit 5 respektive 8 über das Telekommunikationsnetz 10 eingerichtet ist. Die Zugangsnetze 4, 7 sind beispielsweise lokale Netze, die auf dem Internet Protokoll basieren, ISDN-Netze (Integrated Services Digital Network) oder öffentliche geschaltete Telefonnetze oder andere Kommunikationsnetze. Die Zugangseinheiten 5, 8 umfassen Computer, die als Internet-Gateways zwischen den Zugangsnetzen 4, 7 und den Verbindungseinheiten 101, 112 ausgeführt sind.

In der Figur 1 bezeichnet das Bezugszeichen 9 eine Datenquelle, die einen Computer umfasst, der direkt mit dem Telekommunikationsnetz 10 verbunden ist.

Um Daten von der Datenquelle 3 oder 9 über das Telekommunikationsnetz an die Datensenke 6 zu übermitteln, können Datenpakete entlang verschiedenen Pfaden vom Subnetz 11 ans Subnetz 17 übermittelt werden. Ein erster Pfad führt über die Verbindungseinheiten 104, 107, 108 und 111, ein zweiter Pfad führt über die Verbindungseinheit 104, die Vermittlungseinheit 113 und die Verbindungseinheit 110, und ein dritter Pfad führt über die Verbindungseinheiten 102, 103, 105, die Vermitbungseinheit 113 und die Verbindungseinheit 110.

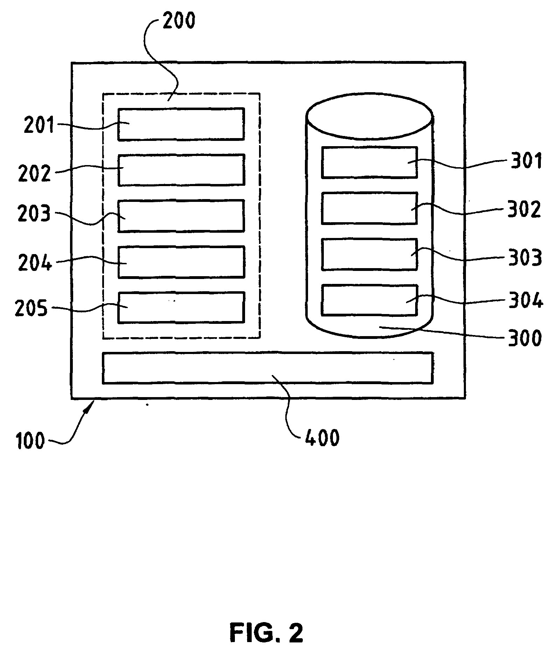

In der Figur 2 ist eine Verbindungseinheit 100 dargestellt, die den Verbindungseinheiten 101, 102, 103, 104, 105, 106, 107, 108, 109, 110, 111 und 112 in der Figur 1 entspricht. Die Verbindungseinheit 100 umfasst einen oder mehrere Computer mit einem Kommunikationsmodul 400 zur Verbindung mit dem Telekommunikationsnetz 10 und zum Entgegennehmen und Weiterleiten von Datenpaketen im Telekommunikationsnetz 10. Das Kommunikationsmodul 400 ermöglicht die Verbindung mit einem Subnetz 11, 12, 13, 14, 15, 16, 17 des Telekommunikationsnetzes 1 und mit einer oder mehreren weiteren Verbindungseinheiten 101, 102, 103, 104, 105, 106, 107, 108, 109, 110, 111, 112 oder Vermittlungseinheit 113. Die Verbindungseinheit 100 umfasst zudem funktionale Module, nämlich das Datenstrombestimmungsmodul 201, das Wertklassenbestimmungsmodul 202, das Dienstklassenbestimmungsmodul 203, das Dienstqualitätbestimmungsmodul 204 und das Kostenerfassungsmodul 205. Diese funktionalen Module sind vorzugsweise als programmierte Softwaremodule ausgeführt, die auf einem computer-lesbaren Medium 200 gespeichert sind und den oder die Prozessoren der Verbindungseinheit 100 derart steuern, dass in der Verbindungseinheit 100 die nachfolgend beschriebenen modulspezifischen Funktionen ausgeführt werden. Der Fachmann wird verstehen, dass die funktionalen Module auch teilweise oder vollständig hardwaremässig ausgeführt werden können.

Die Verbindungseinheit 100 umfasst zudem einen Datenspeicher 300, in welchem Abrechnungsregeln 301, Wertklassen 302, Dienstklassen 303 und Kostenbelege 304 gespeichert sind.

An dieser Stelle soll festgehalten werden, dass die Vermittlungseinheit 13 der Verbindungseinheit 100 entspricht, im Unterschied zu den Verbindungseinheiten 101, 102, 103, 104, 105, 106, 107, 108, 109, 110, 111, 112, jedoch nicht direkt mit einem Subnetz 11, 12, 13, 14, 15, 16, 17 verbunden ist, sondern für die direkte Verbindung von Verbindungseinheiten 101, 102, 103, 104, 105, 106, 107, 108, 109, 110, 111, 112 eingerichtet ist.

Die Funktion des Datenstrombestimmungsmoduls 201 besteht darin, dass es Datenströme, so genannte Flows, von zusammengehörenden Datenpaketen ermittelt, die in der Verbindungseinheit 100 durch das Kommunikationsmodul 400 entgegengenommen wurden. Datenpakete, die zu einem Datenstrom gehören, weisen eine oder mehrere gemeinsame Eigenschaften auf. Solche Eigenschaften umfassen beispielsweise eines oder mehrere gleiche Datenfelder im Datenvorsatz des Datenpakets, zum Beispiel die Quellen-IP-Adresse, die Destinations-IP-Adresse, den Protokolltyp (z.B. TCP, UDP, ICMP, ...) oder die IP-Versionennummer, gleiche Datenfelder im Transportdatenvorsatzfeld des Datenpakets, zum Beispiel Quellen- und Destinationsportnummem, Gemeinsamkeiten im Datenpaket selber, zum Beispiel in der Paketlänge (Anzahl Bytes), Gemeinsamkeiten in anderen speziellen gegebenenfalls vorhandenen Datenfeldern im Datenpaket, zum Beispiel das MPLS-Datenfeld (Multiprotocol Label Switching) oder das DSCP-Datenfeld (Differentiated Services Code Point), oder Gemeinsamkeiten in Daten, die durch Verarbeitung des Datenpakets erhalten wurden, zum Beispiel die autonome Systemnummer. Durch die Ermittlung von Datenströmen können beispielsweise zusammengehörende Datenpakete eines Videodatenstroms, eines Audiodatenstroms oder einer Dateiübertragung (File Download oder File Transfer) bestimmt werden.

Die Funktion des Wertklassenbestimmungsmoduls 202 besteht darin, jeweils die Wertklasse der ermittelten Datenströme zu ermitteln. Die Wertklasse eines ermittelten Datenstroms wird auf Grund von Wertklassenangaben ermittelt, die durch die Datenquelle 3, 9 in die auszusendenden Datenpakete eingefügt werden. Die Wertklassenangaben können auf der IP-Ebene oder auf einer höheren Protokollebene, beispielsweise auf der Applikationsebene, eingefügt werden. Die Wertklassenangaben umfassen vorzugsweise einen Minimalwert und einen Maximalwert und eine Währungsangabe, die einen Geldwertbereich in einer bestimmten Geldwährung definieren. Die Wertklassenangaben können aber auch bloss einen Geldwert mit einer Währungsangabe umfassen. Es ist auch möglich, dass die Wertklassenangaben eine Wertklassenidentifizierung umfassen, die eine im Datenspeicher 300 gespeicherte Wertklasse 302 identifiziert. Die Wertklassenangaben können zum Beispiel in so genannten XML-Meta-Tags (Extended Markup Language) oder in definierten IP-Datenfeldern enthalten sein oder sie können auf Grund von inhaltsspezifischen MPLS-Kanälen oder applikationsspezifischen Datenelementen ermittelt werden.

Die Funktion des Dienstklassenbestimmungsmoduls 203 besteht darin, jeweils die Dienstklasse der ermittelten Datenströme zu ermitteln. Die Dienstklasse eines ermittelten Datenstroms wird auf Grund von Daten in den Datenpaketen des Datenstroms ermittelt. Die Dienstklasse wir vorzugsweise auf Grund des auf der Applikationsebene eingefügten Applikationstyps ermittelt. Es ist jedoch auch möglich, die Dienstklasse auf Grund der Wertklasse oder der Wertklassenangaben zu bestimmen, wofür die Wertklassenangaben zum Beispiel zusätzlich eine Dienstklassenidentifizierung umfassen.

Die Funktion des Dienstqualitätbestimmungsmoduls 204 besteht darin, jeweils die Dienstqualität der ermittelten Datenströme zu ermitteln, die bei der Übermittlung der betreffenden Datenströme durch das Kommunikationsmodul 400 an eine weitere Destination tatsächlich erreicht wird. Die Dienstqualitätsparameter, die für die Ermittlung der erreichten Dienstqualität eines Datenstroms relevant sind, werden durch die ermittelte Dienstklasse dieses Datenstroms bestimmt. Als mögliche Dienstqualitätsparameter sollen hier Übertragungsverzögerung, Übertragungszeit (auf Grund von Zeitstempeln am Beginn und am Ende eines Datenstroms oder eines definierten Teil des Datenstroms) respektive Übertragungsvolumen, Anzahl verlorene Datenpakete und Jitter angeführt werden.

Die im Datenspeicher 300 gespeicherten Dienstklassen 303 umfassen neben einer Dienstklassenidentifizierung Dienstqualitätsparameter, die für die Ermittlung der erreichten Dienstqualität der betreffenden Dienstklasse relevant sind, sowie eine Solldienstqualität mit Minimalanforderungen an die Dienstqualitätsparameter respektive an die Dienstqualität.

**Tabelle 1**

| Abrechnungsregel | | | | |
|---|---|---|---|---|
| * Partner-adresse | * Wertklasse | * Dienstklasse | Kreditdaten | Belastungsdaten |

Die im Datenspeicher 300 gespeicherten Abrechnungsregeln 301 entsprechen einem computerisierten Teil der Dienstleistungsvereinbarung zwischen den Betreibern der Verbindungseinheiten, welche die Kostenverrechnung für die Übermittlung von Datenpaketen durch die Verbindungseinheit 100 regeln. Wie in der Tabelle 1 ersichtlich ist, sind die Abrechnungsregeln 301 jeweils einer Partneridentifizierung einer Partnerkommunikationseinheit (Verbindungseinheit 101, 102, 103, 104, 105, 106, 107, 108, 109, 110, 111, 112 oder Vermittlungseinheit 113) im Telekommunikationsnetz 10 zugeordnet. Die Partneridentifizierung kann eine Partneradresse sein oder eine Kennung, die einer oder mehreren Adressen von Einheiten dieses Partners zugeordnet ist. Wie in der Tabelle 1 ersichtlich ist, sind die Abrechnungsregeln 301 zudem jeweils einer Wertklasse und einer Dienstklasse zugeordnet.

Die Abrechnungsregeln 301 umfassen Daten, beispielsweise einen Kostenanteilswert oder einen festen Kostenwert, zur Berechnung von Kostenbeträgen abhängig von der ermittelten Wertklasse eines Datenstroms, insbesondere abhängig vom Geldwert oder vom Minimalwert und/oder Maximalwert des Geldwertbereichs der ermittelten Wertklasse. Insbesondere umfassen die Abrechnungsregeln 301 Kreditdaten, die für die Berechnung von Kostenbeträgen verwendet werden, wenn die ermittelte erreichte Dienstqualität eine definierte Solldienstqualität erreicht oder übertrifft. Die Kreditdaten umfassen vorzugsweise einen positiven Kreditanteilswert zur Berechnung eines Kreditbetrags aus dem Geldwert der ermittelten Wertklasse. Die Kreditdaten können auch einen festen positiven Kreditwert umfassen, der abhängig von einer Wertklasse festgelegt wird, dem die Abrechnungsregel zugeordnet ist. Insbesondere umfassen die Abrechnungsregeln 301 Belastungsdaten, die für die Berechnung von Kostenbeträgen verwendet werden, wenn die ermittelte erreichte Dienstqualität die definierte Solldienstqualität nicht erreicht. Die Belastungsdaten umfassen vorzugsweise einen negativen Belastungsanteilswert zur Berechnung eines Belastungsbetrags aus dem Geldwert der ermittelten Wertklasse. Die Belastungsdaten können auch einen festen negativen Belastungswert umfassen, der abhängig von einer Wertklasse festgelegt wird, dem die Abrechnungsregel zugeordnet ist. Die Belastungsdaten können auch einen Belastungsanteilwert oder Belastungswert von Null umfassen.

Die Funktion des Kostenerfassungsmoduls 205 besteht darin, Kostenbelege für die Weiterleitung der Datenpakete eines Datenstroms zu erzeugen und im Datenspeicher 300 zu speichern. Das Kostenerfassungsmodul 205 bestimmt im Datenspeicher 300 die Abrechnungsregeln 301, die der ermittelten Wertklasse des Datenstroms zugeordnet sind. Die Abrechnungsregeln 301 können durch das Kostenerfassungsmodul 205 zusätzlich auch auf Grund der ermittelten Dienstklasse des Datenstroms und/oder auf Grund der Partneridentifizierung von der Partnerkommunikationseinheit, von der die Datenpakete des Datenstroms erhalten wurden, bestimmt werden. Die Kostenbelege werden auf Grund der ermittelten Wertklasse des Datenstroms und auf Grund der bestimmten Abrechnungsregeln erzeugt. Die Kostenbelege umfassen mindestens einen Kostenbetrag. Der Kostenbetrag wird durch das Kostenerfassungsmodul 205 vorzugsweise unter Berücksichtigung der ermittelten erreichten Dienstqualität und der Solldienstqualität für den Datenstrom berechnet. Wenn die ermittelte erreichte Dienstqualität die Solldienstqualität erreicht oder übertrifft, wird der Kostenbetrag auf Grund der in den Abrechnungsregeln 301 enthaltenen Kreditdaten und dem in der Wertklasse enthaltenen Geldwert (oder Geldwertbereich) als positiver Kreditbetrag berechnet. Wenn die ermittelte erreichte Dienstqualität die Solldienstqualität nicht erreicht, wird der Kostenbetrag auf Grund der in den Abrechnungsregeln 301 enthaltenen Belastungsdaten und dem in der Wertklasse enthaltenen Geldwert (oder Geldwertbereich) als negativer Belastungsbetrag berechnet. Die Kostenbeträge der erzeugten Kostenbelege werden vorzugsweise durch das Kostenerfassungsmodul 205 im Datenspeicher 300 der Verbindungseinheit 100 jeweils für die Partneridentifizierung der Verbindungseinheit 101, 102, 103, 104, 105, 106, 107, 108, 109, 110, 111, 112 respektive der Vermittlungseinheit 113, von der die Datenpakete des Datenstroms erhalten wurden, aggregiert, beispielsweise aufgeteilt auf die verschiedenen Wert- und/oder Dienstklassen. Die Kostenbelege umfassen zudem vorzugsweise die Partneridentifizierung der Kommunikationseinheit, von der die Datenpakete des Datenstroms erhalten wurde, eine Identifizierung der Verbindungseinheit 101, 102,103, 104, 105, 106, 107, 108, 109, 110, 111, 112 respektive der Vermitttungseinheit 113, in der die Kostenbelege erzeugt wurden, die Partneridentifizierung der Kommunikationseinheit, an die die Datenpakete des Datenstroms weitergeleitet wurden, die ermittelte Wertklasse des Datenstroms, die ermittelte Dienstklasse des Datenstroms, die ermittelte erreichte Dienstqualität und eine Datums- und Zeitangabe. Die im Datenspeicher 300 gespeicherten Kostenbelege 304 können in der Form individueller Kostenbelege oder in der Form aggregierter Kostenbeträge an eine nicht dargestellte Verrechnungszentrale übermittelt werden.

Für Datenpakete, die im Telekommunikationsnetz 10 auf einem Pfad von der Datenquelle 3, 9 zur Datensenke 6 in einer zweiten Kommunikationseinheit, nämlich in einer der Verbindungseinheiten 101, 102, 103, 104, 105, 106, 107, 108, 109, 110, 111, 112 oder in der Vermittlungseinheit 113, von einer ersten Kommunikationseinheit, nämlich von einer der Verbindungseinheiten 101, 102, 103, 104, 105, 106, 107, 108, 109, 110, 111,112 oder von der Vermittlungseinheit 113 oder der Zugangseinheit 5, entgegengenommen werden, wird durch das Datenstrombestimmungsmoduls 201 zunächst der Datenstrom ermittelt, zu dem die Datenpakete gehören. Für einen ermittelten Datenstrom ermittelt das Wertklassenbestimmungsmodul 202 in der zweiten Kommunikationseinheit die Wertklasse. Durch das Dienstklassenbestimmungsmodul 203 der zweiten Kommunikationseinheit wird die Dienstklasse des Datenstroms bestimmt. Die Datenpakete des Datenstroms werden durch die zweite Kommunikationseinheit an die nächste dritte Kommunikationseinheit auf dem Pfad zur Datensenke 6 weitergeleitet, nämlich an eine der Verbindungseinheiten 102, 103, 104, 105, 106, 107, 108, 109, 110, 111, 112 oder an die Vermittlungseinheit 113 oder die Zugangseinheit 8. Durch das Dienstqualitätbestimmungsmodul 204 in der zweiten Kommunikationseinheit wird die Dienstqualität ermittelt, die bei der Übermittlung des Datenstroms von der zweiten Kommunikationseinheit an die dritte Kommunikationseinheit erreicht wurde. Das Kostenerfassungsmodul 205 in der zweiten Kommunikationseinheit ermittelt auf Grund der ermittelten Wertklasse, der ermittelten Dienstklasse und der Partneridentifizierung der ersten Kommunikationseinheit die Abrechnungsregel(n), die für die Berechnung der Kostendaten für die Verrechnung der Übermittlung des Datenstroms an die dritte Kommunikationseinheit zu Grunde gelegt werden soll(en). Dann berechnet das Kostenerfassungsmodul 205 in der zweiten Kommunikationseinheit auf Grund der ermittelten Abrechnungsregel(n) und der ermittelten Dienstqualität den Kostenbetrag für die Übermittlung des Datenstroms an die dritte Kommunikationseinheit. Schliesslich erzeugt das Kostenerfassungsmodul 205 einen Kostenbeleg für die Übermittlung des Datenstroms an die dritte Kommunikationseinheit, der den berechneten Kostenbetrag umfasst. Der erzeugte Kostenbeleg wird durch das Kostenerfassungsmodul 205 im Datenspeicher 300 gespeichert und der berechnete Kostenbetrag wird für die erste Kommunikationseinheit im Datenspeicher 300 der zweiten Kommunikationseinheit aggregiert.

## Patentansprüche

1. Verfahren zur computerisierten Erfassung von Kostendaten für die Verrechnung der Übermittlung von Datenpaketen in einem paketorientierten Telekommunikationsnetz (10), in welchem Datenpakete über eine oder mehrere computerisierte Verbindungseinheiten (100 bis 113) übermittelt werden, umfassend:
- Ermitteln eines Datenstroms von zusammengehörenden Datenpaketen, die jeweils in den Verbindungseinheiten (100 bis 113) entgegengenommen wurden, durch die betreffenden Verbindungseinheiten (100 bis 113),
- Ermitteln einer Wertklasse für den Datenstrom auf Grund von Wertklassenangaben, die in Datenpaketen des Datenstroms enthalten sind, wobei die Wertklasse der Geldwert oder Geldwertbereich des Datenstroms definiert, jeweils durch die Verbindungseinheiten (100 bis 113),
- Ermitteln von Abrechnungsregeln (301) für den Datenstrom, die der ermittelten Wertklasse des Datenstroms zugeordnet sind, jeweils durch die Verbindungseinheiten (100 bis 113),
- Ermitteln einer Dienstklasse für den Datenstrom auf Grund von Daten in den Datenpaketen des Datenstroms, jeweils durch die Verbindungseinheiten (100 bis 113),
**dadurch gekennzeichnet,**
**dass** für den Datenstrom jeweils durch die Verbindungseinheiten (100 bis 113) jeweils die Dienstqualität, die für die Weiterleitung der Datenpakete des Datenstroms durch die betreffende Verbindungseinheit erreicht wurde, ermittelt wird, und dass auf Grund der ermittelten Wertklasse des Datenstroms, auf Grund der ermittelten Abrechnungsregeln des Datenstroms und auf Grund der ermittelten Dienstklasse sowie der ermittelten erreichten Dienstqualität des Datenstroms durch die Verbindungseinheiten (100 bis 113) Kostenbelege, welche mindestens einen Kostenbetrag umfassen, erzeugt und gespeichert werden für die Verrechnung der Weiterleitung der Datenpakete durch die Verbindungseinheit.

2. Verfahren nach Anspruch 1, **dadurch gekennzeichnet, dass** die Abrechnungsregeln (301) jeweils in den Verbindungseinheiten (100 bis 113) gespeichert werden, wobei in die Abrechnungsregeln (301) jeweils Kreditdaten eingefügt werden, die die Berechnung von Kostenbeträgen für Fälle regeln, wo die ermittelte erreichte Dienstqualität eine definierte Solldienstqualität erreicht oder übertrifft, und wobei in die Abrechnungsregeln (301) jeweils Belastungsdaten eingefügt werden, die die Berechnung von Kostenbeträgen für Fälle regeln, wo die ermittelte erreichte Dienstqualität eine definierte Solldienstqualität nicht erreicht.

3. Verfahren nach Anspruch 2, **dadurch gekennzeichnet, dass** die Kreditdaten und die Belastungsdaten jeweils einen von der ermittelten Wertklasse abhängigen Kreditbetrag respektive Belastungsbetrag definieren.

4. Verfahren nach einem der Ansprüche 2 oder 3, **dadurch gekennzeichnet, dass** die definierte Solldienstqualität durch die ermittelte Dienstklasse bestimmt wird.

5. Verfahren nach einem der Ansprüche 1 bis 4, **dadurch gekennzeichnet, dass** die Abrechnungsregeln (301) jeweils in den Verbindungseinheiten (100 bis 113) gespeichert werden, wobei die Abrechnungsregeln (301) jeweils einer Wertklasse, einer Dienstklasse und/oder einer Partneridentifizierung von einer Partnerkommunikationseinheit im Telekommunikationsnetz (10) zugeordnet gespeichert werden, dass die Abrechnungsregeln (301) durch die Verbindungseinheiten (100 bis 113) zusätzlich auf Grund der ermittelten Dienstklasse und/oder der Partneridentifizierung von der Partnerkommunikationseinheit, von der die Datenpakete des Datenstroms erhalten wurden, ermittelt werden, und dass die Kostenbeträge in den Verbindungseinheiten (100 bis 113) jeweils für die betreffende Partneridentifizierung aggregiert werden.

6. Computerisierte Verbindungseinheit (100 bis 113), welche mit einem paketorientierten Telekommunikationsnetz (10) zum Entgegennehmen und Weiterleiten von Datenpaketen verbindbar ist, und welche Verbindungseinheit (100 bis 113) ein Datenstrombestimmungsmodul (201) umfasst zum Ermitteln eines Datenstroms von zusammengehörenden entgegengenommen Datenpaketen, umfassend:
- ein Wertklassenbestimmungsmodul (202) zum Ermitteln einer Wertklasse für den Datenstrom auf Grund von in Datenpaketen des Datenstroms enthaltenen Wertklassenangaben,
- einen Datenspeicher (300) mit darin gespeicherten Abrechnungsregeln (301), die jeweils einer Wertklasse zugeordnet gespeichert sind, und
- ein Dienstklassenbestimmungsmodul (203) zum Ermitteln einer Dienstklasse für den Datenstrom auf Grund von in den Datenpaketen des Datenstroms enthaltenen Daten,
**gekennzeichnet durch**
- ein Dienstqualitätsbestimmungsmodul (204) zum Ermitteln einer für die Weiterleitung der Datenpakete des Datenstroms **durch** die Verbindungseinheit (100 bis 113) erreichten Dienstqualität für den Datenstrom, und
- ein Kostenerfassungsmodul (205) zum Erzeugen und Speichern von Kostenbelegen, die jeweils mindestens einen Kostenbetrag umfassen, für die Verrechnung der Weiterleitung der Datenpakete des Datenstroms **durch** die Verbindungseinheit (100 bis 113) auf Grund der ermittelten Wertklasse des Datenstroms und der Abrechnungsregeln (301), die der ermittelten Wertklasse des Datenstroms zugeordnet sind sowie auf Grund der ermittelten Dienstklasse des Datenstroms und der ermittelten erreichten Dienstqualität des Datenstroms.

7. Verbindungseinheit (100 bis 113) nach Anspruch 6, **dadurch gekennzeichnet, dass** die Abrechnungsregeln (301) Kreditdaten umfassen, die die Berechnung von Kostenbeträgen für Fälle regeln, wo die ermittelte erreichte Dienstqualität eine definierte Solldienstqualität erreicht oder übertrifft, und dass die Abrechnungsregeln (301) Belastungsdaten umfassen, die die Berechnung von Kostenbeträgen für Fälle regeln, wo die ermittelte erreichte Dienstqualität eine definierte Solldienstqualität nicht erreicht.

8. Verbindungseinheit (100 bis 113) nach Anspruch 7, **dadurch gekennzeichnet, dass** die Kreditdaten und die Belastungsdaten jeweils Daten umfassen, die einen von der ermittelten Wertklasse abhängigen Kreditbetrag respektive Belastungsbetrag definieren.

9. Verbindungseinheit (100 bis 113) nach einem der Ansprüche 7 oder 8, **dadurch gekennzeichnet, dass** die definierte Solldienstqualität der ermittelten Dienstklasse zugeordnet ist.

10. Verbindungseinheit (100 bis 113) nach einem der Ansprüche 6 bis 9, **dadurch gekennzeichnet, dass** die Abrechnungsregeln (301) jeweils einer Wertklasse, einer Dienstklasse und/oder einer Partneridentifizierung von einer Partnerkommunikationseinheit im Telekommunikationsnetz (10) zugeordnet gespeichert sind, und dass das Kostenerfassungsmodul (205) eingerichtet ist zum Ermitteln von Abrechnungsregeln zusätzlich auf Grund der ermittelten Dienstklasse und/oder der Partneridentifizierung von der Partnerkommunikationseinheit, von der die Datenpakete des Datenstroms erhalten wurden, und zum Aggregieren der Kostenbeträge für die betreffende Partneridentifizierung.

11. Computerprogrammprodukt umfassend: ein computerlesbares Medium (200) mit darin enthaltenen Computerprogrammcodemitteln zur Steuerung eines oder mehrerer Prozessoren einer computerisierten Verbindungseinheit (100 bis 113), welche mit einem paketorientierten Telekommunikationsnetz (10) zum Entgegennehmen und Weiterleiten von Datenpaketen verbindbar ist, derart, dass in der Verbindungseinheit (100 bis 113) ein Datenstrom von zusammengehörenden entgegengenommen Datenpaketen ermittelt wird, dass in der Verbindungseinheit (100 bis 113) eine Wertklasse für den Datenstrom auf Grund von in Datenpaketen des Datenstroms enthaltenen Wertklassenangaben ermittelt wird, dass in der Verbindungseinheit (100 bis 113) Abrechnungsregeln für den Datenstrom ermittelt werden, die der ermittelten Wertklasse des Datenstroms zugeordnet sind, dass in der Verbindungseinheit (100 bis 113) eine Dienstklasse für den Datenstrom auf Grund von in den Datenpaketen des Datenstroms enthaltenen Daten ermittelt wird, **dadurch gekennzeichnet,**
**dass** das Computerprogrammprodukt weitere Computerprogrammcodemittel umfasst, die die Prozessoren der computerisierten Verbindungseinheit (100 bis 113) derart steuern, dass in der Verbindungseinheit (100 bis 113) Kostenbelege, die jeweils mindesten einen Kostenbetrag umfassen, für die Verrechnung der Weiterleitung der Datenpakete des Datenstroms durch die Verbindungseinheit (100 bis 113) auf Grund der ermittelten Wertklasse des Datenstroms und der ermittelten Abrechnungsregeln (301) des Datenstroms sowie auf Grund der ermittelten Dienstklasse des Datenstroms und der ermittelten erreichten Dienstqualität des Datenstroms erzeugt und gespeichert werden.

12. Das Computerprogrammprodukt nach Anspruch 11, **dadurch gekennzeichnet, dass** es weitere Computerprogrammcodemittel umfasst, die die Prozessoren der computerisierten Verbindungseinheit (100 bis 113) derart steuern, dass die Abrechnungsregeln (301) in einem Datenspeicher (300) der Verbindungseinheit (100 bis 113) gespeichert werden, wobei die Abrechnungsregeln (301) Kreditdaten umfassen, die die Berechnung von Kostenbeträgen für Fälle regeln, wo die ermittelte erreichte Dienstqualität eine definierte Solldienstqualität erreicht oder übertrifft, und wobei die Abrechnungsregeln (301) Belastungsdaten umfassen, die die Berechnung von Kostenbeträgen für Fälle regeln, wo die ermittelte erreichte Dienstqualität eine definierte Solidienstqualität nicht erreicht.

13. Das Computerprogrammprodukt nach Anspruch 12, **dadurch gekennzeichnet, dass** es weitere Computerprogrammcodemittel umfasst, die die Prozessoren der computerisierten Verbindungseinheit (100 bis 113) derart steuern, dass beim Speichem der Abrechnungsregeln (301) mit den Kreditdaten und den Belastungsdaten jeweils Daten gespeichert werden, die einen von der ermittelten Wertklasse abhängigen Kreditbetrag respektive Belastungsbetrag definieren.

14. Das Computerprogrammprodukt nach Anspruch 12 oder 13, **dadurch gekennzeichnet, dass** es weitere Computerprogrammcodemittel umfasst, die die Prozessoren der computerisierten Verbindungseinheit (100 bis 113) derart steuern, dass in der Verbindungseinheit (100 bis 113) die definierte Solldienstqualität auf Grund der ermittelten Dienstklasse bestimmt wird.

15. Das Computerprogrammprodukt nach einem der Ansprüche 11 bis 14, **dadurch gekennzeichnet, dass** es weitere Computerprogrammcodemittel umfasst, die die Prozessoren der computerisierten Verbindungseinheit (100 bis 113) derart steuern, dass die Abrechnungsregeln (301) jeweils in einem Datenspeicher der Verbindungseinheit (100 bis 113) einer Wertklasse, einer Dienstklasse und/oder einer Partneridentifizierung von einer Partnerkommunikationseinheit im Telekommunikationsnetz (10) zugeordnet gespeichert werden, und dass in der Verbindungseinheit (100 bis 113) Abrechnungsregeln (301) auf Grund der ermittelten Dienstklasse und/oder der Partneridentifizierung von der Partnerkommunikationseinheit, von der die Datenpakete des Datenstroms erhalten wurden, ermittelt werden, und dass die Kostenbeträge in der Verbindungseinheit (100 bis 113) jeweils für die betreffende Partneridentifizierung aggregiert werden.

## Revendications

1. Procédé de saisie informatisée de données de coûts pour la facturation de la transmission de paquets de données dans un réseau de télécommunication par paquet (10), dans lequel des paquets de données sont transmis par une ou plusieurs unités de connexion (100 à 113),
comprenant :
- la saisie d'un flux de données de paquets de données cohérents qui ont été réceptionnés respectivement dans les unités de connexion (100 à 113), par les unités de connexion concernées (100 à 113),
- la saisie d'une classe de valeurs pour le flux de données sur la base d'indications de classes de valeur qui sont contenues dans des paquets du flux de données, la classe de valeur, la valeur monétaire ou la zone de valeur monétaire du flux de données étant définie respectivement par les unités de connexion concernées (100 à 113)
- la définition pour le flux de données de règles de décompte (301) qui sont associées à la classe de valeur définie du flux de données, respectivement par les unités de connexion (100 à 113),
- la définition d'une classe de services pour le flux de données sur la base de données dans les paquets de données du flux de données, respectivement par les unités de connexion (100 à 113),
**caractérisé en ce qu'**
il est déterminé pour le flux de données respectivement par les unités de connexion (100 à 113) respectivement la qualité de service qui est atteinte par le transfert des paquets de données du flux de données par l'unité de connexion concernée et **en ce que** sur la base de la classe de valeur déterminée du flux de données, sur la base des règles de facturation déterminées du flux de données et sur la base de la classe de service déterminée ainsi que de la qualité de service atteinte déterminée du flux de données par les unités de connexion (100 à 113), des justificatifs de coûts qui comprennent au moins un montant de coûts sont générés et stockés pour la facturation de la transmission des paquets de données par l'unité de connexion.

2. Procédé selon la revendication 1, **caractérisé en ce que** les règles de décompte (301) sont stockées respectivement dans les unités de connexion (100 à 113), dans les règles de décompte (301) respectivement des données de crédit étant insérées qui règlent le calcul de montants de coûts pour des cas où la qualité de service déterminée atteinte a atteint ou dépassé une qualité théorique définie de service, et dans les règles de décompte (301) respectivement des données de débit étant insérées qui règlent le calcul de montants de coût pour les cas où la qualité de service déterminée atteinte n'atteint pas une qualité définie de service théorique.

3. Procédé selon la revendication 2, **caractérisé en ce que** les données de crédit et les données de débit définissent respectivement un montant de débit respectivement un montant de crédit dépendant de la classe de valeur déterminée.

4. Procédé selon l'une des revendications 2 ou 3, **caractérisé en ce que** la qualité de service théorique définie est déterminée par la classe de service déterminée.

5. Procédé selon l'une des revendications 1 à 4, **caractérisé en ce que** les règles de décompte (301) sont stockées respectivement dans les unités de connexion (100 à 113), les règles de décompte (301) respectivement d'une classe de valeur, d'une classe de service et/ou d'une identification de partenaire sont associées et stockées par une unité de communication de partenaire dans le réseau de télécommunication (10), **en ce que** les règles de décompte (301) sont déterminées par les unités de connexion (100 à 113) en supplément sur la base de la classe de service déterminée et/ou de l'identification de partenaire par l'unité de communication de partenaire qui a reçu les paquets de données du flux de données et **en ce que** les montants de coûts sont agrégés dans les unités de connexion (100 à 113) respectivement pour l'identification de partenaire concernée.

6. Unité de connexion informatisée (100 à 113) qui peut être reliée à un réseau de télécommunication par paquets (10) pour la réception et le transfert de paquets de données et unité de connexion (100 à 113) qui comprend un module de détermination de flux de donnée (201) pour déterminer un flux de paquets de données cohérents reçus, comprenant :
un module de détermination de classe de valeur (202) pour la détermination d'une classe de valeur pour le flux de données sur la base d'indication de classes de valeur contenues dans des paquets du flux de données,
une mémoire de données (300) stockant des règles de décompte (301) qui sont stockées et associées respectivement à une classe de valeur, et
- un module de détermination de classe de service (203) pour la détermination d'une classe de service pour le flux de données sur la base de données contenues dans les paquets de données du flux de donnés,
**caractérisée par**
- un module de détermination de qualité de service (204) pour la détermination d'une qualité de service atteinte pour la transmission des paquets de données du flux de données par l'unité de connexion (100 à 113),
- un module de saisie de coûts (205) pour la génération et le stockage de justificatifs de coûts qui comprennent respectivement au moins un montant de coûts pour la facturation de la transmission des paquets de données du flux de données par l'unité de connexion (100 à 113) sur la base de la classe de valeur déterminée du flux de données et des règles de décompte (301) qui sont associées à la classe de valeur déterminée du flux de données ainsi que sur la base de la classe de service déterminée du flux de données et de la qualité de service atteinte déterminée du flux de données.

7. Unité de connexion (100 à 113), selon la revendication 6, **caractérisée en ce que** les règles de décompte (301) comprennent des données de crédit qui règlent le calcul de montants de coûts pour les cas où la qualité de service atteinte déterminée atteint ou dépasse une qualité de service théorique définie et **en ce que** les règles de décompte (301) comprennent des données de débit qui règlent le calcul de montants de coûts pour les cas où la qualité de service atteinte déterminée n'atteint pas une qualité de service théorique définie.

8. Unité de connexion (100 à 113), selon la revendication 7, **caractérisée en ce que** les données de crédit et les données de débit comprennent respectivement des données qui définissent un montant de crédit respectivement un montant de débit dépendant de la classe de valeur déterminée.

9. Unité de connexion (100 à 113), selon l'une des revendications 7 ou 8, **caractérisée en ce que** la qualité de service théorique définie est associée à la classe de service déterminée.

10. Unité de connexion (100 à 113), selon l'une des revendications 6 à 9, **caractérisée en ce que** les règles de décompte (301) sont stockées et associées respectivement à une classe de valeur, une classe de service et/ou une identification de partenaire par l'unité de communication de partenaire dans le réseau de télécommunication (10) et **en ce que** le module de saisie de coûts (205) est paramétré pour la détermination de règles de décompte en supplément sur la base de la classe de service déterminée et/ou de l'identification de partenaire par l'unité de communication de partenaire, qui reçoit les paquets de données du flux de données et pour l'agrégation des montants de coûts pour l'identification du partenaire concerné.

11. Produit de programme informatique comprenant : un support informatisable (200) avec des moyens de code de programme informatique pour la commande d'un ou de plusieurs processeurs d'une unité de connexion (100 à 113) informatisée qui peut être reliée à un réseau de télécommunication par paquet (10) pour la réception et la transmission de paquets de données de sorte que dans l'unité de connexion (100 à 113), il est déterminé un flux de données de paquets de données cohérents reçus de sorte que dans l'unité de connexion (100 à 113), il est déterminé une classe de valeur pour le flux de données sur la base d'indications de classe de valeur contenues dans les paquets du flux de données, de sorte que dans l'unité de connexion (100 à 113), il est déterminé des règles de décompte pour le flux de données qui sont associées à la classe de valeur déterminée du flux de données, de sorte que dans l'unité de connexion (100 à 113), il est déterminé une classe de service pour le flux de données sur la base de données contenues dans les paquets du flux de données, **caractérisé en ce que**
le produit de programme informatique comprend d'autres moyens de code de programme informatique qui commandent les processeurs des unités de connexion (100 à 113) informatisées de sorte que dans l'unité de connexion (100 à 113), il est généré et stocké des justificatifs de coûts qui comprennent respectivement au moins un montant de coûts pour la facturation de la transmission des paquets du flux de données par l'unité de connexion (100 à 113) sur la base de la classe de valeur déterminée du flux de données et des règles de décompte (301) du flux de données qui sont associées à la classe de valeur déterminée du flux de données ainsi que sur la base de la classe de service déterminée du flux de données et de la qualité de service atteinte déterminée du flux de données.

12. Produit de programme informatisé selon la revendication 11, **caractérisé en ce qu'**il comprend d'autres moyens de code de programme informatique qui commandent les processeurs des unités de connexion (100 à 113) informatisées de sorte que les règles de décompte (301) sont stockées dans une mémoire de données (300) de l'unité de connexion (100 à 113), les règles de décompte (301) comprenant des données de crédit qui règlent le calcul de montants de coûts pour les cas où la qualité de service atteinte déterminée atteint ou dépasse une qualité de service théorique définie et les règles de décompte (301) comprenant des données de débit qui règlent le calcul de montants de coûts pour les cas où la qualité de service atteinte déterminée n'atteint pas une qualité de service théorique définie.

13. Produit de programme informatisé selon la revendication 11, **caractérisé en ce qu'**il comprend d'autres moyens de code de programme informatique qui commandent les processeurs des unités de connexion (100 à 113) informatisées de sorte que lors du stockage des règles de décompte (301) les données de crédit et les données de débit sont stockées respectivement avec des données qui définissent un montant de crédit respectivement un montant de débit dépendant de la classe de valeur déterminée.

14. Produit de programme informatisé selon la revendication 12 ou 13, **caractérisé en ce qu'**il comprend d'autres moyens de code de programme informatique qui commandent les processeurs des unités de connexion (100 à 113) informatisées de sorte que la qualité de service théorique définie est déterminée sur la base de la classe de service déterminée dans l'unité de connexion (100 à 113).

15. Produit de programme informatisé selon l'une des revendications 11 à 14, **caractérisé en ce qu'**il comprend d'autres moyens de code de programme informatique qui commandent les processeurs des unités de connexion (100 à 113) informatisées de sorte que les règles de décompte (301) sont stockées respectivement dans une mémoire de donnée de l'unité de connexion (100 à 113), et associées à une classe de valeur, une classe de service et/ou une identification de partenaire par une unité de communication de partenaire dans le réseau de télécommunication (10), et de sorte que dans les unités de connexion (100 à 113), des règles de décompte (301) sont déterminées sur la base de la classe de service déterminée et/ou de l'identification de partenaire par l'unité de communication de partenaire qui a reçu les paquets du flux de données et les montants de coûts sont agrégés dans l'unité de connexion (100 à 113) respectivement pour l'identification de partenaire concernée.

## Claims

1. Method for computerised capturing of cost data for billing for the transmission of data packets in a packet-oriented telecommunication network (10), in which data packets are transmitted via one or more computerised connection units (100 to 113), comprising:
- determining, by the respective connection units (100 to 113), a data streams of related data packets, which were each received in the connection units (100 to 113),
- determining, in each case by the connection units (100 to 113), a value class for the data stream based on value class data contained in data packets of the data stream, the value class defining the monetary value or the monetary value range of the data stream,
- determining, in each case by the connection units (100 to 113), billing rules (301) for the data stream, which are assigned to the determined value class of the data stream,
- determining, in each case by the connection units (100 to 113), a service class for the data stream based on data in the data packets of the data streams,
**characterised in**
**that** for each data stream the service quality achieved for the forwarding of the data packets of the data stream by the respective connection unit is determined by the connection units (100 to 113), and in that based on the determined value class of the data stream, based on the determined billing rules for the data stream and based on the determined service class as well as the determined achieved service quality of the data stream, cost records are generated by the connection units (100 to 113) comprising at least one cost amount and are stored for the billing of the forwarding of the data packet by the connection unit.

2. Method according to claim 1, **characterised in that** the billing rules (301) are stored in each case in the connection units (100 to 113), credit data being inserted in each case into the billing rules (301), which credit data govern the calculation of cost amounts for cases where the determined achieved service quality reaches or exceeds a defined target service quality, and debit data being inserted in each case in the billing rules (301), which debit data govern the calculation of cost amounts for cases where the determined achieved service quality does not reach a defined target service quality.

3. Method according to claim 2, **characterised in that** the credit data and the debit data define in each case a credit amount or respectively a debit amount dependent upon the determined value class.

4. Method according to one of the claims 2 or 3, **characterised in that** the defined target service quality is determined by the determined service class.

5. Method according to one of the claims 1 to 4, **characterised in that** the billing rules (301) are stored in each case in the connection units (100 to 113), the billing rules (301) being stored in each case assigned to a value class, a service class and/or a partner identification of a partner communication unit in the telecommunication network (10), **in that** the billing rules (301) are determined by the connection units (100 to 113) additionally based on the determined service class and/or the partner identification of the partner communication unit from which the data packets of the data stream were obtained, and **in that** the cost amounts are aggregated in the connection units (100 to 113) for the respective partner identification in each case.

6. Computerised connection unit (100 to 113), which is connectible to a packet-oriented telecommunication network (10) for receiving and forwarding data packets, and which connection unit (100 to 113) comprises a data stream determination module (201) for determining a data stream of related received data packets, comprising:
- a value class determining module (202) for determining a value class for the data stream based on value class data contained in data packets of the data stream,
- a data memory (300) with billing rules (301) stored therein, which are stored in each case assigned to a value class, and
- a service class determining module (203) for determining a service class for the data stream based on data contained in the data packets of the data stream,
**characterised by**
- a service quality determining module (204) for determining a service quality achieved for the data stream for the forwarding of the data packets of the data stream by the connection unit (100 to 113), and
- a cost capturing module (205) for generating and storing cost records, each comprising at least one cost amount, for the billing of the forwarding of the data packets of the data stream by the connection unit (100 to 113) based on the determined value class of the data stream and the billing rules (301), which are assigned to the determined value class of the data stream, and based on the determined service class for the data stream and the determined achieved service quality for the data stream.

7. Connection unit (100 to 113) according to claim 6, **characterised in that** the billing rules (301) comprise credit data which govern the calculation of cost amounts for cases where the determined achieved service quality reaches or exceeds a defined target service quality, and **in that** the billing rules (301) comprise debit data which govern the calculation of cost amounts for cases where the determined achieved service quality does not reach a defined target service quality.

8. Connection unit (100 to 113) according to claim 7, **characterised in that** the credit data and the debit data each comprise data defining a credit amount or respectively a debit amount dependent upon the determined value class.

9. Connection unit (100 to 113) according to one of the claims 7 or 8, **characterised in that** the defined target service quality is assigned to the determined service class.

10. Connection unit (100 to 113) according to one of the claims 6 to 9, **characterised in that** the billing rules (301) are stored in each case assigned to a value class, a service class and/or a partner identification of a partner communication unit in the telecommunication network (10), and **in that** the cost capturing module (205) is set up to determine billing rules additionally based on the determined service class and/or the partner identification of the partner communication unit from which the data packets of the data stream were obtained, and for aggregating the cost amounts for the respective partner identification.

11. Computer program product comprising: a computer-readable medium with computer program code means contained therein for controlling one or more processors of a computerised connection unit (100 to 113), which is connectible to a packet-oriented telecommunication network (10) for receiving and forwarding data packets, such that in the connection unit (100 to 113) a data stream of related received data packets is determined, in the connection unit (100 to 113) a value class is determined for the data stream based on value class data contained in data packets of the data stream, in the connection unit (100 to 113) billing rules are determined for the data stream, which are assigned to the determined value class of the data stream, in the connection unit (100 to 113) a service class is determined for the data stream based on data contained in the data packets of the data stream, **characterised**
**in that** the computer program product comprises further computer program code means which control the processors of the computerised connection unit (100 to 113) in such a way that in the connection unit (100 to 113) cost records are generated and stored, each comprising at least one cost amount, for the billing of the forwarding of the data packets of the data stream, by the connection unit (100 to 113), based on the determined value class of the data stream and the determined billing rules (301) of the data stream as well as on the determined service class for the data stream and the determined achieved service quality for the data stream.

12. The computer program product according to claim 11, **characterised in that** it comprises further computer program code means, which control the processors of the computerised connection unit (100 to 113) such that the billing rules (301) are stored in a data memory (300) of the connection unit (100 to 113), the billing rules (301) comprising credit data which govern the calculation of cost amounts for cases where the determined achieved service quality reaches or exceeds a defined target service quality, and the billing rules (301) comprising debit data which govern the calculation of cost amounts in cases where the determined achieved service quality does not reach a defined target service quality.

13. The computer program product according to claim 12, **characterised in that** it comprises further computer program code means which control the processors of the computerised connection unit (100 to 113) such that, when storing the billing rules (301) with the credit data and the debit data, data are stored in each case defining a credit amount or respectively a debit amount dependent upon the determined value class.

14. The computer program product according to claim 12 or 13, **characterised in that** it comprises further computer program code means which control the processors of the computerised connection unit (100 to 113) such that the defined target service quality is determined in the connection unit (100 to 113) based on the determined service class.

15. The computer program product according to one of the claims 11 to 14, **characterised in that** it comprises further computer program code means that control the processors of the computerised connection unit (100 to 113) such that stored in a data memory of the connection unit (100 to 113) are the billing rules (301) assigned in each case to a value class, a service class and/or a partner identification of a partner communication unit in the telecommunication network (10), and **in that** billing rules (301) are determined in the connection unit (100 to 113) based on the determined service class and/or the partner identification of the partner communication unit from which the data packets of the data stream were obtained, and **in that** the cost amounts are aggregated in the connection unit (100 to 113) for the respective partner identification in each case.
